# EUROPÄISCHE PATENTSCHRIFT

(11) **EP 1 581 388 B1**
(45) Veröffentlichungstag und Bekanntmachung des Hinweises auf die Patenterteilung: **14.03.2012**
(21) Anmeldenummer: 03812564.7
(22) Anmeldetag: 09.12.2003
(51) Int. Cl.: B32B 27/06, B32B 27/36, C08L 67/02, C08L 3/02, C08J 5/18, B29C 47/06, B29C 55/16, B65D 65/46

(54) **BIOLOGISCH ABBAUBARE MEHRSCHICHTFOLIE**
BIODEGRADABLE MULTI-LAYER FILM
PELLICULE MULTICOUCHE BIODEGRADABLE

(30) Priorität: 09.12.2002 DE 10258227
(43) Veröffentlichungstag der Anmeldung: 05.10.2005
(60) Teilanmeldung: 11174359.7
(73) Patentinhaber: BIOP Biopolymer Technologies AG, 01217 Dresden (DE)
(72) Erfinder: BERGER, Werner, 01217 Dresden (DE); DE JONG, Frits, Pieter, Eduard, Anton, 01324 Dresden (DE)
(74) Vertreter: Uhlemann, Henry
(86) Internationale Anmeldenummer: PCT/DE2003/004157
(87) Internationale Veröffentlichungsnummer: WO 2004/052646

(56) Entgegenhaltungen:
- EP-A- 0 537 657
- WO-A-02/16468
- WO-A-99/01278
- WO-A-03/035753
- CH-A- 680 590
- DE-A- 4 116 404
- US-A- 5 412 005
- US-A- 5 500 465
- US-A- 5 512 378
- US-A- 5 756 194
- US-B1- 6 235 815
- US-B1- 6 242 102

## Beschreibung

Die Erfindung betrifft eine biologisch abbaubare Mehrschichtfolie mit einer einstellbaren Barriere-Wirkung gegenüber Sauerstoff (O₂), Stickstoff (N₂), Kohlendioxid (CO₂) und Wasserdampf zur Anwendung im Verpackungsbereich, insbesondere für Lebensmittel, oder in der Landwirtschaft, sowie ein Verfahren zu deren Herstellung.

An Verpackungsmaterialien, speziell für Lebensmittel, werden in der Regel folgende Anforderungen gestellt:
- geringe Sauerstoffpermeabilität (Sauerstoffdurchlässigkeit),
- geringe Wasserdampfdurchlässigkeit,
- gute mechanische Eigenschaften,
- Siegelfähigkeit,
- Reckfähigkeit,
- Gute Verarbeitungsfähigkeit in der Konfektionierung,
- Preiswerte Herstellung,
- Lebensmittelneutralität,
- Preiswerte und umweltfreundliche Entsorgung.

Verpackungsmaterialien für Obst und Gemüse müssen dabei auch den natürlichen Atmungs- und Reifungsvorgang dieser Produkte mit einer kontrollierten Sauerstoff- und Wasserdampfpermeation Rechnung tragen.

Um die Anforderung der geringen Permeabilität für Gase wie O₂, N₂ und CO₂ zu erreichen, wurden in den letzten Jahren Mono- und Mehrschichtfolien auf Basis synthetischer Polymere entwickelt.

Meist werden, um die vielseitigen Anforderungen zu erfüllen, in einer Folie verschiedene Materialien und deren unterschiedlichen Eigenschaften kombiniert:

Die Kombination verschiedener Materialien erfolgt dabei entweder durch:
- Laminieren: Nachträgliches Aufbringen einer Laminatschicht auf eine Basisschicht.
- Coextrusion: Gleichzeitiges Herstellen mehrerer Schichten in einem Arbeitsgang.
- Blendherstellung: Vermischen der Materialien und Extrusion zu einer Schicht.

Vorraussetzungen für gute Gebrauchseigenschaften der Folie sind vergleichbare Schmelzpunkte und Viskositäten der Komponenten bei der Extrusion oder Coextrusion. Diese Parameter sollten möglichst nahe beieinander liegen oder können durch Zusatzstoffe wie Phasen- oder Haftvermittler, bzw. andere Additive, aneinander angenähert werden.

Bei der Herstellung von laminierten Folien durch Schmelzbeschichtung sind die Anforderungen an diese Parameter nicht so hoch, wie bei den anderen genannten Methoden. Die Laminierung durch Lösungsmittelauftrag ist sehr aufwendig und kostenintensiv. Auch die Haftung der Laminatschicht auf der Basisschicht ist meist nicht ausreichend.

Für Verpackungsfolien im Lebensmittelbereich werden heutzutage meist noch Folien aus synthetischen Materialien eingesetzt. Diese bestehen häufig aus Polyvinylchlorid oder Polyvinylidenchlorid. Seit einigen Jahren werden auch Mehrschichtfolien aus alternativen, chlorfreien Materialien, wie z. B. Polyamid, Polyethylen, Polyvinylalkohol verwendet. Um das Kriterium der geringen Gaspermeabilität zu erreichen, werden diese zum Teil auch mit Aluminium oder Siliziumverbindungen beschichtet.

Nachteilig ist, dass diese Folien auf Basis synthetischer Polymere nicht biologisch abbaubar sind. Bedingt durch die mangelnde Umweltneutralität und die hohen Entsorgungskosten wird daher in den letzten Jahren versucht, diese durch biologisch abbaubare Materialien auf Basis nachwachsender Rohstoffe zu ersetzen.

Materialien auf Basis biologisch abbaubarer Polymere und nachwachsenden Rohstoffen sind überblicksmäßig in folgenden Publikationen beschrieben:
- J. Schröter, Biologisch abbaubare Werkstoffe (BAW) Kunststoffe 89 (1999) 4, Seite 101-104;
- F. Reckert, Biologisch abbaubare Kunststoffe, Kunststoffe 92 (2002) 1 Seite 78-79.

Diese nachwachsenden, biologischen Rohstoffe sind erheblich schwieriger zu verarbeiten als synthetische Polymere. Eine Ursache für die schwierigere Verarbeitbarkeit liegt z. B. bei der Stärke darin, dass sie keinen definierten Schmelzbereich und eine geringe Schmelzefestigkeit hat. Um ausreichende Schmelzeigenschaften zu erlangen und somit verarbeitbar zu werden, muss die Stärke erst vorbehandelt werden.

Thermoplastische Stärke (TPS) erhält man beispielsweise durch Verarbeitung mit Glycerin und Wasser (WO9005161).

Um thermoplastisch Stärke als verarbeitungs- und gebrauchsfähige Werkstoffe einzusetzen, muss sie als ein Blend mit anderen Materialien in einer Schmelze verarbeitet werden (DE 199 38 672 und DE 100 62 848). Derartige Blends bestehend aus Stärke und thermoplastischen Polymeren sind auch aus DE 195 13 237 A1 und DE 969212557 T2 bekannt.

WO 02/059198 A1 beschreibt eine Mischung aus Polydihydroxydisäureestem mit definierten Molekulargewicht und Schmelzpunkten und Polylactat. Die Mischung kann auch Stärke enthalten.

Bekannt sind Methoden zur Vernetzung der Stärkeoberftäche, die zu einer Verbesserung der Wasserresistenz und des Permeationsverhaltens führen (US 6,242,102).

Bekannt sind aus WO 9001043 aliphatische Polyester (Polyhydroxycarbonsäuren), die in Lösung auf vorgefertigte Folien aus hydrophilen Polymeren, wie z.B. Stärke, laminiert werden können. Dabei werden die Lösungsmittel nach dem Beschichtungsprozess verdampft.

EP 0616569 B1 beschreibt eine laminierte Folie auf Stärkebasis, bei der die Laminatschicht aus natürlichen oder synthetischen Wachsen oder aus einem Gemisch von Wachsen besteht.

EP 1195401 A1 beschreibt ebenfalls eine laminierte Folie, bei der die Laminatschicht als selektiv permeable für CO₂ beschrieben wird und auf Poly (4-methylpenten-1) basiert.

EP 0495950 beschreibt die Herstellung von laminierten Folien, bei der ein hydrophobes Polymer auf eine hydrophile Stärkefolie aufgedampft wird.

Für diese Laminate gelten wie bei Laminat-Folien aus synthetischen Materialien, die Nachteile der aufwendigen, teuren Herstellung und der mangelnden Haftung der Laminatschicht auf der Basisfolie.

Eine hohe selektive Permeabilität für CO₂ und gute Barrierewirkung gegenüber Wasserdampf wird nach DE 19613484 A1 auch durch Einschichtfolien aus Blends von Stärkeacetat und aliphatischen geradkettigen oder verzweigten Polycarbonaten erreicht.

Nachteilig muss hierzu erst aufwendig Stärkeacetat hergestellt werden.

In EP 0647184 B1 wird eine Mehrschichtfolie aus einem feuchtigkeitsempfindlichen Polymer und thermisch empfindlichen Polymeren und weiteren Komponenten beschrieben.

WO 03/035753 A1 (veröffentlicht am 01. Mai 2003) beschreibt Zusammensetzungen in der Form eines Films bestehend aus den Komponenten, destrukturierter Stärke und Polyhydroxyalkanoat-Copolymer (PHA) mit einem definierten Aufbau aus mindestens 2 zufällig sich wiederholenden Monomereneinheiten. Diese Mischung wird unter anderem zur Herstellung eines laminaren Films verwendet, in dem mindestens eine Schicht aus dieser Mischung aufgebaut ist.

In WO 9116375 beschreibt Tomka die Herstellung einer Mehrschichtfolie durch Coextrusion, bestehend aus thermoplastisch-verarbeitbarer Stärke mit einer Polyethylen- oder Polypropylenschicht und einem Haftvermittler zur Verbesserung der Haftung zwischen den Schichten.

In DE 4116404 A1 wird eine Polymermischung beschrieben und auf die Möglichkeit hingewiesen, diese zur Herstellung einer wasserbeständigen Dreischichtfolie durch Coextrusion zu verwenden. Vorgeschlagen wird für die Außenschichten dieser Folie ein Blend aus thermoplastischer Stärke (TPS), Polyolefin und einem Polyethylen-Acrylat-MSA Copolymeren und für die mittige Schicht eine thermoplastische Stärke. Durch Zusatz von Borax, Magnesiumsulfat und Calciumcarbonat kann die Wasserbeständigkeit noch weiter verbessert werden.

In EP 0537657 B1 wird ein Verfahren zur Herstellung von Mehrschichtfolien aus TPS oder einem Blend mit TPS und Polyolefinen (Polyethylen, Polypropylen) mit Einsatz von Phasen- oder Haftvermittlern in Form eines Blockcopolymeren beschrieben.

EP 0479964 und US 6.242.102 beschreiben je eine Mehrschichtfolie bestehend aus thermoplastisch-verarbeitbarer Stärke, die mindestens 20 Gew. % eines Zuschlagstoffes enthält und einer weiteren Schicht aus einem Polyolefin oder einem Polymerblend aus Stärke und Polyolefin. Als Beschichtungsvarianten werden auch die Siliciummonooxydbeschichtung und das Auftragen von Alkylsiloxanen angeführt.

Das Grundmaterial dieser zuletzt genannten Mehrschichtfolien besteht zwar aus biologisch abbaubarer Stärke, nachteilig enthalten alle diese Folien aber Polyolefine, wie z. B. Polyethylen oder Polypropylen, oder andere nicht biologisch abbaubare Stoffe.

Die für Kunststofffolien bekannte Technik des Reckens ist nicht ohne weiteres auf Folien aus Stärke übertragbar, da meist bedingt durch den Reckvorgang eine Phasenentmischung zwischen Stärke und der anderen Polymerphase stattfindet, was zu unbrauchbaren Folien führt.

EP 0537657 B1 führt diese schlechten Reckeigenschaften auf den hohen Wassergehalt der bekannten Stärkeblends zurück und schlägt ein Verfahren vor, bei dem der für die Coextrusion zulässige Wasseranteil im eingesetzten Stärkeblend kleiner als 1 % sein muss.

Um diesen niedrigen Wasseranteil zu erreichen, muss die eingesetzte TPS von einem Wasseranteil von ca. 18 % auf unter 1 % heruntergetrocknet werden. Nachteilig ergibt sich durch dieses Trocknen eine starke Belastung des Materials.

Aufgabe der vorliegenden Erfindung ist die Bereitstellung einer Mehrschichtfolie zum Einsatz für Verpackungen, die
- vollständig biologisch abbaubar ist,
- eine geringe Sauerstoffdurchlässigkeit aufweist,
- reckfähig ist und
- eine definierte Barrierewirkung gegenüber N₂ , CO₂ und Wasserdampf aufweist.

Erfindungsgemäß wird die Aufgabe durch eine Mehrschichtfolie, erhältlich durch Coextrusion, gelöst, die aus mindestens je
a.) einer Stärkeblendschicht bestehend aus einem modifizierten thermoplastischen Stärkeblend entsprechend Anspruch 1 und
b.) einer Polyesterschicht bestehend aus einem biologisch abbaubaren Polyester entsprechend Anspruch 1,
aufgebaut ist.

Die Folie besteht aus mindestens zwei Schichten. Vorzugsweise besteht sie aus einer Innenschicht, die von zwei Außenschichten umgeben ist.

Durch den Herstellungsprozess, bei dem die Materialien für alle Schichten aufgeschmolzen und die Schichten gleichzeitig durch Coextrusion gebildet werden, sind die Schichten über die komplette Interaktionsfläche verschmolzen und physikalisch untrennbar miteinander verbunden.

Die Materialien der einzelnen Schichten sind so gewählt, bzw. durch Zusatzstoffe aneinander angepasst, dass sie vergleichbare Viskositäts- und Schmelzeigenschaften haben.

Das modifizierte thermoplastische Stärkeblend besteht aus den folgenden Komponenten:
- 30 bis 75 %, vorzugsweise 40 bis 75 %, Stärke
- 2 bis 10 % Wasser,
- 10 bis 50 %, vorzugsweise 15 bis 40 %, biologisch abbaubarer Polyester,
- 5 bis 20 % Verträglichkeitsvermittler,
- bis zu 10 % Weichmacher und
- bis 3 % Verarbeitungshilfsmittel.

Um die Fließfähigkeit zu erhöhen, werden der Mischung bis zu 10 % Weichmacher, vorzugsweise Glycerin, beigemischt. Der Wasseranteil wirkt als zusätzlicher Weichmacher.

Das modifizierte Stärkeblend ist hauptverantwortlich für die Sauerstoff-Barrierewirkung, durch Variation der Dicke dieser Schicht und des Stärkeanteils kann die Gaspermeabilität eingestellt werden.

Der Polyester im modifizierten Stärkeblend, sowie der für die Außenschicht verwendete, ist vorzugsweise aus Dihydroxyverbindungen und Dicarbonsäuren als Monomeren aufgebaut.

Besonders vorzugsweise ist der Polyester ein statistisch aliphatischaromatischer Copolyester, der aus den Monomeren Butandiol, Adipinsäure und Terephthalsäure oder ein rein-aliphatischer Polyester, der aus den Monomeren Butandiol, Bernsteinsäure und Adipinsäure besteht.

Der Anteil der Terephthalsäure darf 30 % nicht überschreiten, um die biologische Abbaubarkeit zu gewährleisten.

Alternativ ist ein solcher Polyester auch beispielsweise ein Polylactid oder ein Blend aus einem Polylactid und einem anderen Polyester oder ein Polyvinylacetat (PVAc).

Die Stärkeblendschicht enthält keinen Polyester des folgenden Typs: Polyhydroxyalkanoat-Copolymer bestehend aus mindestens 2 zufällig sich wiederholenden Monomereneinheiten, wobei ein erstes Monomer die Struktur (I) hat: 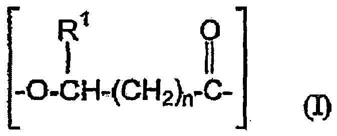 worin R1 für H, oder ein C1 oder C2 Alkyl-Rest steht, mit n = 1 oder 2;
wobei ein zweites Monomer die Struktur (II) hat: 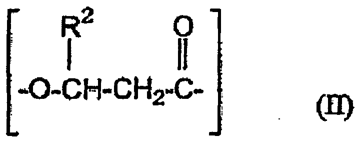 worin R2 für einen C3 bis C19 Alkyl oder C3 bis C19 Alkenyl-Rest steht, oder das zweite Monomer die Struktur (III) hat: 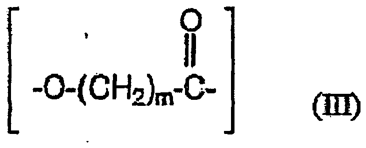 worin m von 2 bis 9 reicht.

Die beiden Außenschichten und der Polyesteranteil im Stärkeblend können aus demselben Polyestermaterial oder unterschiedlichen Polyestermaterialien oder jeweils einer Mischung aus Polyestermaterialien gebildet sein.

Der die Außenschichten bildende Polyester ist dabei hauptverantwortlich für die Barrierewirkung gegen Wasserdampf. Durch Variation der Dicke der Außenschichten kann somit die Wasserdampfpermeabilität eingestellt werden.

Als Verträglichkeitsvermittler bzw. Phasenvermittler werden vorzugsweise polymere Komponenten eingesetzt, die jeweils blockweise angeordnete hydrophile und hydrophobe Gruppen enthalten. Besonders vorzugsweise enthält der Verträglichkeitsvermittler ein blockartig verseiftes Polyvinylacetat (DE 19750846). Alternativ können auch andere Verträglichkeitsvermittler, wie "Lotader", CDT-Chemie, "Novatec", Mitsubishi Chemicals, Japan, "Surleyn", DuPont, USA, oder "Lonly", MitsuiToatsu, Japan, eingesetzt werden.

Als Verträglichkeitsvermittler, können auch Polymere mit reaktiven Gruppen, wie Epoxy- oder Säureanhydridgruppen, die während des Verarbeitungsschritt mit der Stärke reagieren, verwendet werden (EP 0596437 B2).

Überraschend wurde gefunden, dass der Einfluss des Verträglichkeitsvermittlers nicht nur für die Blendstabilität von Bedeutung ist, sondern auch für die Festigkeit der Adhäsionsschicht zwischen der Innen- und den Außenschichten der Mehrschichtfolie. Dies beruht vermutlich darauf, dass die hydrophilen und hydrophoben Blocksegmente des Verträglichkeitsvermittlers in die Phasengrenzschicht migrieren und somit die Haftung vergrößern.

Als Verarbeitungshilfsmittel können unter anderem Erucasäureamid (z. B. Loxamid E der Firma Cognis), Stearinsäure (Edenor L2SM der Firma Cognis), Glyzerinmonostearat (Edenor GMS 50/2 der Firma Cognis) verwendet werden.

Vorzugsweise beträgt die gesamte Dicke der Folie 10 µm bis 300 µm. Eine Außenschicht ist dabei vorzugsweise zwischen 1 µm bis 100 µm dick. Die Dicke der Innenschicht beträgt vorzugsweise zwischen 5 µm und 250 µm.

Vorzugsweise ist die Innenschicht 2 mal bis zu 10 mal dicker als eine Außenschicht.

Die erfindungsgemäße Folie zeichnet sich durch die folgenden vorteilhaften Eigenschaften aus:
- gute Reißfestigkeit,
- gute Dehnungseigenschaften,
- Reckfähigkeit (bis zu einem Faktor von 1 : 5)
- gute Siegelfähigkeit,
- vollständige biologische Abbaubarkeit,
- Lebensmittelneutralität.

Erfindungsgemäß wird die Mehrschichtfolie nach Anspruch 1 hergestellt durch ein Verfahren der Coextrusion gemäß den Ansprüchen, bei dem mindestens je eine
a.) Schicht bestehend aus einem modifizierten thermoplastischen Stärkeblend und
b.) Schicht bestehend aus einem biologisch abbaubaren Polyester, gleichzeitig gebildet wird.

Das Verfahren der Coextrusion mit den Varianten der Blascoextrusion und der Breitschlitzextrusion sind an sich bekannt. Beide Varianten können bei dem erfindungsgemäßen Verfahren alternativ angewandt werden. Zur Anwendung kommt vorzugsweise die Blascoextrusion.

Das erfindungsgemäße Verfahren zeichnet sich dadurch aus, dass für den Aufbau der Schichten Materialien mit besonders aufeinander abgestimmten Schmelz- und Viskositätseigenschaften gewählt werden und dass die Stärkeblendschicht bis 10 % Wasser enthält.

Vorzugsweise haben die Materialien eine Viskosität mit einem MFI-Wert zwischen 4 g bis 10 g pro 10 min bei 130 °C und 10 kg Belastung oder 5 g bis 40 g pro 10 min bei 160 °C und 10 kg Belastung.

Das modifizierte thermoplastische Stärkeblend wird dabei über eine Barriereschnecke mit einem Kreuzlochmischteil und Schmelzefilter geleitet.

Die Temperatur des Stärkeblends darf 160 °C nicht überschreiten, da ansonsten gebundenes Wasser verdampft, ein Abbau der Stärke erfolgt und die Phasenstabilität des Blend gestört wird.

Im Extruder wird vorzugsweise ein Stufengradient gefahren, so dass für die Stärkeblendkomponente eine Temperatur zwischen 100 °C und 130 °C gehalten wird. Besonders vorzugsweise wird der Stärkeblend zuerst bei um die 110 °C aufgeschmolzen, dann auf 130 °C erhitzt, auf 125 °C abgekühlt und wiederum zur Extrusion wieder auf 135 °C erhitzt.

Für die Herstellung der Polyesterschicht wird vorzugsweise die Temperatur im Extruder zwischen 120 °C und 140 °C gehalten. Besonders vorzugsweise wird der Polyester zuerst bei um die 120 °C aufgeschmolzen, dann auf 150 °C erhitzt, auf 140 °C abgekühlt und bis zur Extrusion bei dieser Temperatur gehalten.

Bei Verwendung von Polylactiden für die Polyesterschicht sind Temperaturen von 150 °C bis 190 °C notwendig:
Überraschenderweise kann das modifizierte Stärkeblend bei dem erfindungsgemäßen Verfahren bis zu 8 % bis 10 % Wasser enthalten, ohne dass das Wasser bei der Verarbeitung verdampft und Blasen entstehen.

Vorteilhaft müssen die Materialien, aus denen die Schichten aufgebaut werden, vor der Bearbeitung nicht getrocknet werden.

Bei der Extrusion wird die Folie vorzugsweise in einem Verhältnis von 1 : 3 bis 1 : 5 aufgeblasen. Das Aufblasverhältnis bezieht sich dabei auf das Verhältnis des Durchmessers der Düse im Blaskopf und der Folienbreite am Ende des Prozesses.

Überraschend tritt bei einem Aufblasverhältnis von 1 : 5 noch keine Phasenseparation bzw. Schichtentrennung auf.

Folgende Parameter sind für die Morphologieausprägung häufig eng miteinander verknüpft und können nicht unabhängig voneinander variiert werden:
- Art, Größe des Extruders
- Gewichtsverhältnisse der Komponenten im Stärkeblend
- Schneckengeometrie
- Temperatur, Verweilzeit
- Schergeschwindigkeit
- Viskositätsverhältnis der Komponenten unter den Scherbedingungen
- Zeitdauer der Scherbelastung
- Grenzflächenenergie.

Völlig unerwartet wurde gefunden, dass die bei der Herstellung des Verträglichkeitsvermittlers verbleibenden Na-Acetat Restanteile von ca. 1,5-3,0 Gew. % als Wasserbinder im Blend wirken und damit die Coextrusion nicht stören.

Besonders überraschend zeichnet sich die Folie trotz des hohen Wassergehalts des Stärkematerials durch eine gute Reckfähigkeit aus.

Die Folien lassen sich bei einem Verhältnis von 1 : 3 bis 1 : 5 monoaxial oder biaxial recken. Dabei tritt keine Phasenseparation zwischen Stärkeblend und Polyesterkomponenten der Schichten auf.

Vorzugsweise werden die Folien in einem Verhältnis bis 1 : 5, vorzugsweise bis 1 : 4, gereckt.

Ein Recken kann in einem Temperaturbereich von 30 °C bis 70 °C erfolgen. Vorzugsweise geschieht das Recken bei einer Temperatur zwischen 40 °C bis 60 °C.

Vorteilhaft erhöht sich durch das Recken die Zugfestigkeit und reduziert sich die Dehnbarkeit der Folie.

Zu der Erfindung gehört auch die Verwendung der erfindungsgemäßen Mehrschichtfolie für Verpackungen, insbesondere für Lebensmittel.

Anhand der folgenden Ausführungsbeispiele wird die Erfindung näher erläutert:

### Ausführungsbeispiel 1:

In den nachfolgenden Ausführungsbeispielen werden folgende Produkte zum Aufbau der Polyester bzw. Stärkeblendschicht verwandt:
Ecoflex FBX 7011, BASF, Ludwigshafen, ist ein statistisch aliphatischaromatischer Copolyester aus den Monomeren Butandiol, Adipinsäure und Terephthalsäure. Der Anteil der Terephthalsäure beträgt unter 30 %.
PLA 4042 D, Cargill Dow LLC, USA, ist ein Polylactid.
BIOPar^{®} 9345, BIOP Biopolymer Technologies AG, Dresden, ist ein Stärkeblend, bestehend aus Stärke, Verträglichkeitsvermittlern, Glycerin, Verarbeitungshilfsmittel und einem variablen Anteil an einem Polyester.

BIOPar^{®} 9345/15 enthält:
ca. 40 % bis 50 % Stärke,
10 % bis 20 % Verträglichkeitsvermittler,
1 % bis 3 % Verarbeitungshilfsmittel,
20 % bis 50 % EcoFlex FBX 7011 (MFI 10)
10 % Glycerin.

Die folgenden Stärkeblends sind analog aufgebaut, enthalten aber unterschiedliche Polyesteranteile:
BIOPar^{®} 9345/31 enthält 50 % EcoFlex FBX 7011 (MFI 10).
BIOPar^{®} 9345/30 enthält 40 % EcoFlex FBX 7011 (MFI 10).
BIOPar^{®} 9712/23 enthält 30 % EcoFlex FBX 7011 (MFI 10).
BIOPar^{®} 9713/24 enthält 20 % EcoFlex FBX 7011 (MFI 10).

In der nachfolgenden Tabelle werden die Viskositäten und Schmelztemperaturen der für den Schichtaufbau der Mehrschichtfolien eingesetzten Komponenten verglichen:

| Komponente | Schmelzviskosität MFI bei 130 °C und 10,0 kg Belastung [g/10 min] | Schmelzviskosität MFI bei 160 °C und 10,0 kg Belastung [g/10 min] | Schmelztemperatur (DSC) [°C] |
|---|---|---|---|
| Ecoflex FBX 7011 (MFI 3) | 5,4 | 33,5 | 110 - 115 |
| Ecoflex FBX 7011 (MFI 10) | 10 | ca. 40 | 110 - 115 |
| BIOPar^{®} 9345/31 | 9,1 | 18,8 | |
| BIOPar^{®} 9345/30 | 8,8 | 18,7 | |
| BIOPar^{®} 9345/15 | 8,2 | 18,7 | |
| BIOPar^{®} 9712/23 | 4,3 | 9,6 | |
| BIOPar^{®} 9713/24 | 1,4 | 5,2 | |
| Ecoflex (3/10)* | 6,9 | ca. 19 | |
| PLA 4042 D | - | 3,8 | 200 |
| Blend aus 75 % Ecoflex (3/10)* und 25 % PLA 4042 D | - | 33 | |
| Blend aus 60 % Ecoflex (3/10)* und 40 %PLA 4042 D | - | 26,5 | |
| Blend aus 45 % Ecoflex (3/10)* und 55 % PLA 4042 D | - | 17,2 | |

| | | | |
|---|---|---|---|
| * Ecoflex (3/10) bezeichnet einen Blend aus 50 % Ecoflex FBX 7011 (MFI 10) und 50 % Ecoflex FBX 7011 (MFI 3). | | | |

### Ausführungsbeispiel 2:

Beschrieben wird die Herstellung einer Dreischichtfolie vom Typ ABA, wobei die äußere und innere Schicht (A) aus dem biologisch abbaubaren Polyester Ecoflex FBX 7011 und die mittige Schicht (B) aus dem Stärkeblend BIOPar^{®} 9345-30 oder BIOPar^{®} 9345-15 aufgebaut wird.

Die Herstellung erfolgt mit einer Coex-3 Schichtblasfolienanlage der Firma Windmöller & Hölscher vom Typ Varex^{®} ; Optifil Plus; Filmatic-K Doppelwickler.

Diese Anlage ist mit folgenden Komponenten bestückt:
- Extruder A, Varex^{®} 60.30 D für die Außenschicht Ecoflex FBX 7011,
- Extruder B, Varex^{®} 90.30 D für die mittige Schicht BIOPar^{®} 9345-30 mit einer LTS-Schnecke 37021001,
- Extruder C, Varex^{®} 60.30 D für die Innenschicht Ecoflex FBX 7011,
- Dosiereinrichtungen für die Granulate und Förderschnecken mit speziellen Misch- und Homogenierzonen und Siebwechslern
- einem Folienblaskopf für Dreischichtfolien mit einem Düsendurchmesser 280 mm, einer Spaltbreite von 0,8 mm bestückt.

Eine Folienbreite von 1.530 mm und Foliendicke von 40 µm wird bei folgenden Parametern erreicht:
- Gesamtmaterialdurchsatz 169,6 kg/h,
- Druck: außen 280 bar, mitte 247 bar, innen 250 bar und
- Temperaturen:
   Zylinder-Filter außen - 120 - 140 - 150 - 140 - 140 - 140 °C,
   Zylinder-Filter mitte - 100 - 120 - 130 - 130 - 130 - 125 - 125 -130 °C,
   Zylinder-Filter innen - 120 - 140 - 150 - 140 - 140 - 140 °C,
   Blaskopftemperatur: 130 °C,
- Abzugsgeschwindigkeit 17,7 m/min,
- Aufblasverhältnis: 1 : 3,5 bis 1 : 5.

### Ausführungsbeispiel 3:

Beschrieben wird die Herstellung einer Dreischichtfolie vom Typ ABA mit einer Schichtzusammensetzung analog Ausführungsbeispiel 2, mit dem Unterschied, dass die Herstellung auf einer Schichtblasfolienanlage der Firma Kuhne, Maschinen-Nr. 2002-140312-0100; KFB 45 - 70 - 1.600 BC erfolgt.

Diese Anlage ist mit folgenden Komponenten bestückt:
- einem Außenextruder K 45-24 D C für die Außenschicht aus Ecoflex FBX 7011,
- einem Hauptextruder K 70-30 D-B mit Barriere-Schnecke für die mittige Schicht aus BIOPar^{®} 9345-30,
- einem Innenextruder K 45-24 D C für die Innenschicht aus Ecoflex FBX 7011,
- Dosiereinrichtungen für die Granulate und
- einem Folienblaskopf für Dreischichtfolien, Düsendurchmesser 220 mm; Düsenspalt 1,0 mm und
- entsprechenden Abzugssystemen.

Eine Folienbreite von 880 mm bis 1000 mm und Foliendicke von 30 µm wird bei folgenden Parametern erreicht:
- Gesamtmaterialdurchsatz: 125 kg/h bei
- Druck: außen 135 bar, mitte 260 bar, innen 195 bar und
- Temperaturen:
   Zylinder-Filter außen - 120 - 140 - 150 - 140 - 140 - 140 °C,
   Zylinder-Filter mitte - 100 - 120 - 130 - 130 - 130 - 125 - 125 -130 °C,
   Zylinder-Filter innen - 120 - 140 - 150 - 140 - 140 - 140 °C,
   Blaskopftemperatur: 130 °C,
- Aufblasverhältnis beträgt 1 : 2 bis 1 : 4,
- Abzugsgeschwindigkeit 20 m/min,

### Ausführungsbeispiel 4:

Beschrieben wird die Herstellung einer Dreischichtfolie vom Typ ABA mit einer Schichtzusammensetzung analog Ausführungsbeispiel 2, mit dem Unterschied, dass die Herstellung auf einer Forschungsanlage der Firma BFA Plastic GmbH, Rossdorf, erfolgt.

Diese Anlage ist mit folgenden Komponenten bestückt:
- einem Außenextruder BFA 30-25, LD 1:25, PE-Schnecke mit Mischkopf für die Außenschicht aus Ecoflex FBX 7011,
- einem Hauptextruder des Battenfeld-Typs Uni-Ex 1-45-25 B, LD 1:25, mit Barriere-Schnecke, Schneckendurchmesser 45 mm, PE-Schnecke und Madddock-Element für die mittige Schicht aus BIOPar^{®} 9345-30,
- einem Innenextruder BFA 30-25, LD 1:25, PE-Schnecke mit Mischkopf für die Innenschicht aus Ecoflex FBX 7011,
- Dosiereinrichtungen für die Granulate, basierend auf ConPro Gravimetric Feedhoppers Type KTW G3 und
- einem Folienblaskopf für Mono- oder 3-5 Schichtfolien, Düsendurchmesser 80 mm, Düsenspalt 1,0 mm und
entsprechenden Abzugssystemen.

Eine Folienbreite von 450 mm bis 800 mm und Foliendicke von 30 µm bis 50 µm wird bei folgenden Parametern erreicht:
- Gesamtmaterialdurchsatz: 20 kg/h bei
- Druck: außen 220 bar, mitte 380 bar, innen 220 bar und
- Temperaturen:
   Zylinder-Filter außen - 140 - 151 - 155 - 145 - 142 °C,
   Zylinder-Filter mitte - 110 - 140 - 140 - 135 -135 °C,
   Zylinder-Filter innen - 140 - 151 - 155 - 145 - 142 °C,
   Blaskopftemperatur: 130 °C,
- Aufblasverhältnis beträgt 1 : 3,2
- Abzugsgeschwindigkeit: 8 m/min.

### Ausführungsbeispiel 5:

In der nachfolgenden Tabelle werden die mechanischen Eigenschaften von Dreischichtfolien des Typs ABA, die analog Ausführungsbeispiel 4 hergestellt sind, in Abhängigkeit der Zusammensetzung des für die mittige Schicht B verwendeten Stärkeblends (Variation Polyesteranteil) verglichen.

Für die äußere und innere Schichten A wurden jeweils der biologisch abbaubare Polyester Ecoflex (3/10) verwendet.

Die Folien haben jeweils ein Masseverhältnis zwischen den Schichten A : B : A von 10 : 80 :10 und eine Gesamtdicke von 50 µm.

Sie wurden mit einer Abzugsgeschwindigkeit von 8 m pro Minute und einem Aufblasverhältnis von 1 : 3,2 bis 1 : 3,3 hergestellt.

| Zusammensetzung der mittigen Schicht B | Messrichtung | Elastizitätmodul [Mpa] | Zugfestigkeit [Mpa] | Reißdehnung [%] | Weiterreißfestigkeit [cN/mm] | Schlagzähigkeit [J/mm] |
|---|---|---|---|---|---|---|
| | | | | | | |
| Biopar 9345/30 enthält 40% Ecoflex (3/10) | Extrusion | 130 | 12,1 | 393 | 608 | 2.92 |
| | Expansion | 101 | 13,0 | 495 | 1184 | |
| | | | | | | |
| Biopar 9712/23 enthält 30 Ecoflex (3/10 | Extrusion | 171 | 10,7 | 226 | 464 | 3,0 |
| | Expansion | 129 | 10.2 | 346 | 880 | |
| | | | | | | |
| Biopar 9713/24 enthält 20% Ecoflex (3/10) | Extrusion | 222 | 7,1 | 64 | 272 | 0,8 |
| | Expansion | 161 | 6,2 | 82 | 400 | |

Produktzusammensetzungen siehe Ausführungsbeispiel 1.

Bei Variation der Zusammensetzung der mittigen Schicht B können zum Beispiel durch den Polyesteranteil im Stärkeblend die mechanischen Eigenschaften wesentlich beeinflusst werden.

### Ausführungsbeispiel 6:

In der nachfolgenden Tabelle werden die mechanischen Eigenschaften von Dreischichtfolien des Typs ABA, die analog Ausführungsbeispiel 4 hergestellt sind, in Abhängigkeit der Zusammensetzung des für die innere und äußere Schichten A verwendeten biologisch abbaubare Polyester verglichen. Für diese Schichten wurde ein Polyester verwendet, der aus den Komponenten Ecoflex (3/10) und dem Polylactid PLA 4042 D besteht. Die 1. Spalte gibt den Massenanteil der PLA 4042 D Komponente an. Der Rest des Polyesters ist jeweils aus Ecoflex (3/10) aufgebaut.

Für die mittige Schicht wurde jeweils das Stärkeblend Biopar 9345/30 verwendet.

Die Folien haben jeweils ein Masseverhältnis zwischen den Schichten A : B : A von 15 : 70 : 15 und eine Gesamtdicke von 50 µm.

Sie wurden mit einer Abzugsgeschwindigkeit von 8 m pro Minute und einem Aufblasverhältnis von 1 : 3,5 hergestellt.

| Massenanteil PLA 4042 D in den Schichten A (%) | Messrichtung | Elastizitätmodul [MPa] | Zugfestigkeit [MPa] | Reißdehnung [%] | Weiterreißfestigkeit [cN/mm] | Schlagzähigkeit [J/mm] |
|---|---|---|---|---|---|---|
| | | | | | | |
| 25 | Extrusion | 134 | 13,1 | 386 | 816 | 4.00 |
| | Expansion | 74 | 10,9 | 397 | 1344 | |
| | | | | | | |
| 40 | Extrusion | 328 | 14,5 | 286 | 1312 | 8,04 |
| | Expansion | 123 | 11,0 | 256 | 2560 | |
| | | | | | | |
| 55 | Extrusion | 603 | 16,5 | 238 | 533 | 10,80 |
| | Expansion | 190 | 10,0 | 104 | 2507 | |
| | | | | | | |
| 100 | Extrusion | 989 | 20,6 | 60 | 3111 | 8,71 |
| | Expansion | 993 | 20,0 | 53 | 5600 | |

Durch Variation der Zusammensetzung der Polyesteranteile in den, das Stärkeblend umgebenden, Schichten können die mechanischen Eigenschaften wesentlich verbessert werden.

### Ausführungsbeispiel 7:

In der nachfolgenden Tabelle werden die Permeationsraten für die Gase O₂, N₂, CO₂ nach DIN 53380 und Wasserdampf nach DIN 53122 (von 1992) von Dreischichtfolien des Typs ABA, die analog Ausführungsbeispiel 2 hergestellt sind, in Abhängigkeit von
- der Zusammensetzung des für die mittige Schicht B verwendeten Stärkeblends (Zeilen 2, 3 und 5),
- der Reckung (Zeilen 6 und 7),
- der Luftfeuchte (Zeile 8)
verglichen.

| | Zusammensetzung | Foliendicke (µm) | Relative Luftfeuchte | Gas-Permeation [cm³/ m² x Tag x bar nach DIN 53380 | | | Wasserdampf-Permeation [g/ (m² x Tag)] nach DIN 53122 |
|---|---|---|---|---|---|---|---|
| | | | [%] | O₂ | N₂ | CO₂ | |
| 1. | Ecoflex FBX 70111 (Daten der BASF) | | | 1600* | | | 140 |
| 2. | BIOPar^{®} 37.7 | 50 | 40 | 95 | | | - |
| | (30 % Ecoflex) | | 85 | 1100 | | | |
| 3. | BIOPar^{®} 9345/15 (40 % Ecoflex) | 47 | 40 | 14-95 | | | 148 |
| | | | 85 | 1035 | | | |
| 4. | A: Ecoflex (3/10) | 45 | 40 | 12 | | | 121 |
| | B: BIOPar^{®} 9345/15 | | 85 | 720 | | | |
| | A: Ecoflex (3/10) | | | | | | |
| 5. | A: Ecoflex (3/10) | 30 | 40 | 41 | | | 57 |
| | B: BIOPar^{®} 9383 | | 85 | 770 | | | |
| | A: Ecoflex (3/10) | | | | | | |
| 6. | A: Ecoflex (3/10) | 70 | 40 | 18 | | | 110 |
| | B: BIOPar^{®} 9345/15 | | | | | | |
| | A: Ecoflex (3/10) | | 85 | 685 | | | |
| 7. | A: Ecoflex (3/10) | 35 | 50 | 128 | | | |
| | B: BIOPar^{®} 9345/15 | | | | | | |
| | A: Ecoflex (3/10) | | | | | | |
| 8. | A: Ecoflex (3/10) | 55 | 0 | 19 | 95 | 116 | |
| | B: BIOPar^{®} 9345/15 | | 52 | 134 | 50 | 1662 | |
| | A: Ecoflex (3/10)* | | 85 | 474 | 157 | 4169 | |

Zum Vergleich mit den Mehrschichtfolien sind in der 1. bzw. 2. und 3. Zeile Daten für Monoschichtfolien aus dem Polyester Ecoflex FBX 7011 bzw. der Stärkeblends BIOPar^{®} 37.7 (30 % Polyester) und BIOPar^{®} 9345/15 (40 % Polyester) aufgeführt.

Die in der 4. bis 8. Zeile aufgeführten Dreischichtfolien des Typs ABA bestehen aus je einer inneren und äußeren Schicht A Ecoflex (3/10)*. Die Zusammensetzung des für die mittige Schicht B verwendeten Stärkeblends ist in der Tabelle angegeben (Nähere Informationen zu den Produktzusammensetzungen siehe Ausführungsbeispiel 1).

Die Dreischichtfolien haben jeweils ein Masseverhältnis zwischen den Schichten A : B : A von 10 : 80 : 10.

Die in der 5. Zeile aufgeführte Folie enthält in der Stärkeblendschicht 4 % Kronus.-Farbstoff, das Stärkeblend ist sonst identisch mit dem aus Zeile 3 und 4.

Die in der 6. Zeile aufgeführte Folie ist wie die aus Zeile 4 aufgebaut mit einer höheren Dicke.

Die Zusammensetzung und die Herstellung der Folie in Zeile 7 entspricht der aus Zeile 6 mit dem Unterschied, dass die Folie bei 60 °C in einem Verhältnis 1 : 3 gereckt wurde.

Vergleicht man die Monoschichtfolien in Zeile 1 und 3 so bewirkt die Erhöhung des Polyesteranteils eine starke Reduzierung der O₂-Permeation.

Der Farbstoffanteil von 4 % erhöht nur die O₂-Permeationswerte und beeinflusst nicht die anderen gemessenen Parameter.

Eine monoaxiale Reckung erhöht die O₂-Permeationswerte.

Signifikant ist bei allen Folien die Erhöhung der Permeationswerte von O₂- und Wasserdampf bei 85 % relativer Luftfeuchte gegenüber den bei 40 % gemessen Werten. Aus Zeile 8 geht hervor, dass mit zunehmender Luftfeuchte die Permeationswerte sich generell erhöhen, auch für N₂ und CO₂.

### Ausführungsbeispiel 8:

In der nachfolgenden Tabelle werden die mechanischen Eigenschaften von Dreischichtfolien des Typs ABA, die analog Ausführungsbeispiel 4 hergestellt sind, in Abhängigkeit des Verhältnis der Schichtdicken zwischen innerer, mittiger und äußerer Schicht verglichen.

Für die äußere und innere Schicht A wurde jeweils der biologisch abbaubare Polyester Ecoflex (3/10) verwendet.

Für die mittige Schicht wurde jeweils das Stärkeblend Biopar 9345/30 verwendet.

Die Folien haben jeweils eine Gesamtdicke von 50 µm.

Sie wurden mit einer Abzugsgeschwindigkeit von 8 m pro Minute und einem Aufblasverhältnis von 1 : 3,5 hergestellt.

In Spalte 1 ist das Masseverhältnis zwischen den Schichten A : B : A als Masse für das Verhältnis der Schichtdicken angegeben.

| Massenverhältnis A:B:A | Messrichtung | Elastizitätmodul [MPa] | Zugfestigkeit [MPa] | Reißdehnung [%] | Weiterreißfestigkeit [cN/mm] | Schlagzähigkeit [J/mm] |
|---|---|---|---|---|---|---|
| | | | | | | |
| 10:80:10 | Extrusion | 62 | 13,9 | 555 | 1176 | 3,44 |
| | Expansion | 64 | 13,1 | 579 | 1344 | |
| | | | | | | |
| 20:60:20 | Extrusion | 64 | 15,5 | 587 | 15424 | 3,04 |
| | Expansion | 64 | 15,5 | 527 | 4064 | |
| | | | | | | |
| 25:50:25 | Extrusion | 61 | 16,5 | 573 | 13984 | 3,24 |
| | Expansion | 63 | 15,2 | 534 | 14304 | |

Bei der Variation der Masseverhältnisse der Schichten werden die Zugfestigkeit und die Weiterreißfestigkeit wesentlich verbessert, während die Reißdehnung überraschend konstant bleibt.

### Ausführungsbeispiel 9:

In der nachfolgenden Tabelle werden die mechanischen Eigenschaften von Dreischichtfolien des Typs ABA, die analog Ausführungsbeispiel 2 (Zeile 1 und 2) bzw. analog Ausführungsbeispiel 3 (Zeile 3 und 4) hergestellt sind, in Abhängigkeit des Düsenspalts und der Abzugsgeschwindigkeit verglichen.

Für die äußere und innere Schicht A wurde jeweils der biologisch abbaubare Polyester Ecoflex (3/10) verwendet.

Für die mittige Schicht wurde das Stärkeblend Biopar 9345/15 (Zeile 1 und 2) oder Biopar 9345/30 (Zeile 3 und 4) verwendet.

Die Folien haben jeweils ein Masseverhältnis zwischen den Schichten A : B : A von 11 : 78 : 11 (Zeile 1 und 2) bzw. von 10 : 80 : 10 (Zeile 3 und 4).

Ein wichtiger Parameter, in dem sich die in Ausführungsbeispiel 2 (Zeile 1 und 2) und die in Ausführungsbeispiel 3 (Zeile 3 und 4) verwendeten Anlagen unterscheiden, ist der Düsenspalt des Blaskopfs:
Ausführungsbeispiel 2 (Zeile 1 und 2): 0,8 mm
Ausführungsbeispiel 3 (Zeile 3 und 4): 1,0 mm

| | Abzugs-Geschwindigkeit [m/min] | Gesamt-Dicke [µm] | Aufblasverhältnis | Messrichtung | Elastizitätmodul [MPa] | Zugfestigkeit [MPa] | Reißdehnung [%] | Weiterreißfestigkeit [cN/mm] | Schlagzähigkeit [J/mm] |
|---|---|---|---|---|---|---|---|---|---|
| | | | | | | | | | |
| 1 | 32,0 | 30 | 1:3,4 | Extr.* | 49 | 19,9 | 718 | 6044 | 2,60 |
| | | | | | | | | | |
| 2 | 17,6 | 50 | 1:3,4 | Extr.* | 125 | 16,2 | 1085 | 693 | 4,20 |
| | | | | | | | | | |
| 3 | 30,3 | 30 | 1:2,5 | Extr.* | 118 | 13,7 | 274 | 1013 | 3,2 |
| | | | | Exp.* | 106 | 10,2 | 467 | 4213 | |
| | | | | | | | | | |
| 4 | 21,3 | 30 | 1:3,6 | Extr.* | 114 | 11,7 | 361 | 5813 | 2,67 |
| | | | | Exp.* | 90 | 10,6 | 446 | 2933 | |

| | | | | | | | | | |
|---|---|---|---|---|---|---|---|---|---|
| *Extr. = Extrusionsrichtung, Exp. = Expansionsrichtung. | | | | | | | | | |

Die Ergebnisse zeigen deutlich, das man bei einem Düsenspalt von 0, 8 mm (Zeile 1 und 2) im Vergleich zu 1 mm (Zeile 3 und 4) wesentlich bessere mechanische Eigenschaften erhält. Eine weitere Verbesserung dieser Eigenschaften erfolgt durch erhöhte Abzugsgeschwindigkeiten.

### Ausführungsbeispiel 10:

In der nachfolgenden Tabelle wird die Reckfähigkeit einer Dreischichtfolie des Typs ABA, die analog Ausführungsbeispiel 2 hergestellt ist, und der Einfluss einer nachfolgenden Reckung der Folie auf die mechanischen Eigenschaften der Folie dargestellt.

Für die äußere und innere Schicht A wurde jeweils der biologisch abbaubare Polyester Ecoflex (3/10) und für die mittige Schicht jeweils das Stärkeblend Biopar 9345/15 verwendet.

Die Ausgangsfolie wurde mit einer Abzugsgeschwindigkeit von 11,3 m pro Minute und einem Aufblasverhältnis von 1 : 3,4 hergestellt.

Die Reckung erfolgte monoaxial bei 60 °C und mit einem Reckverhältnis von 1 : 3.

| Gesamtdicke | Reckung | Messrichtung | Zugfestigkeit [MPa] | Reißdehnung [%] | Weiterreißfestigkeit [cN/mm] | Schlagzähigkeit [J/mm] |
|---|---|---|---|---|---|---|
| | | | | | | |
| 70 µm | nein | Extrusion | 18,2 | 894 | 1067 | 6,03 |
| | | | | | | |
| 35 µm | ja | Extrusion | 43 bis 55 | 442 | - | - |

Durch eine nachfolgende Reckung wird die Zugfestigkeit der Folie signifikant verbessert.

### Ausführungsbeispiel 11:

Beschrieben wird die Herstellung einer Zweischichtfolie vom Typ AB, wobei die äußere Schicht (A) aus dem biologisch abbaubaren Polyester Ecoflex FBX 7011 und die innere Schicht (B) aus dem Stärkeblend BIOPar^{®} 9345-30. aufgebaut wird.

Die Herstellung erfolgt analog Ausführungsbeispiel 4 mit dem Unterschied, dass die Anlage nur mit 2 Extrudern bestückt ist.

### Ausführungsbeispiel 12:

Beschrieben wird die Herstellung einer Dreischichtfolie vom Typ ABC, wobei die äußere Schicht (A) aus dem biologisch abbaubaren Polyester Ecoflex FBX 7011, die mittige Schicht (B) aus dem Stärkeblend BIOPar^{®} 9345-30 und die innere Schicht aus dem Polylactid PLA 4042 D aufgebaut wird.

Die Herstellung erfolgt analog Ausführungsbeispiel 4 mit dem Unterschied, dass der mit dem Polylactid C bestückte Extruder C bei ca. 150 °C bis 190 °C betrieben wird.

## Patentansprüche

1. Mehrschichtfolie erhältlich durch Coextrusion, aufgebaut aus mindestens je
a.) einer Stärkeblendschicht aus einem modifizierten thermoplastischen Stärkeblend, welches aus folgenden Komponenten besteht:
• 30 % bis 75 % Stärke,
• 2% bis 10 % Wasser,
• 10 % bis 50 % biologisch abbaubarer Polyester,
• 5 % bis 20 % Verträglichkeitsvermittler,
• bis zu 10 % Weichmacher und
• bis zu 3 % Verarbeitungshilfsmittel,und
b.) einer Polyesterschicht bestehend aus einem biologisch abbaubaren Polyester,
wobei die Stärkeblendschicht kein Polyhydroxyalkanoat-Copolymer bestehend aus mindestens 2 zufällig sich wiederholenden Monomereneinheiten,
wobei ein erstes Monomer die Struktur (I) hat: 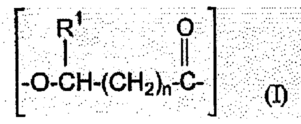 worin R1 für H, oder ein C1 oder C2 Alkyl-Rest steht, mit n = 1 oder 2; wobei ein zweites Monomer die Struktur (II) hat: 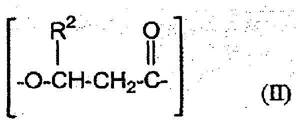 worin R2 für einen C3 bis C19 Alkyl oder C3 bis C19 Alkenyl-Rest steht,
oder das zweite Monomer die Struktur (III) hat: 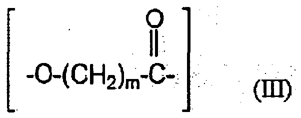 worin m von 2 bis 9 reicht,
enthält.

2. Mehrschichtfolie nach Anspruch 1, **dadurch gekennzeichnet, dass** die Stärkeblendschicht von zwei Polyesterschichten umgeben ist.

3. Mehrschichtfolie nach Anspruch 1 oder 2, **dadurch gekennzeichnet, dass** der biologisch abbaubare Polyester aus Dihydroxyverbindungen und Dicarbonsäuren als Monomeren aufgebaut ist.

4. Mehrschichtfolie nach Anspruch 3, **dadurch gekennzeichnet, dass** die Monomere Butandiol, Adipinsäure und Terephthalsäure oder Butandiol, Bernsteinsäure und Adipinsäure sind.

5. Mehrschichtfolie nach Anspruch 1 oder 2, **dadurch gekennzeichnet, dass** die Polyesterschicht ein Polylactid oder ein Blend aus Polylactid und einem anderen Polyester oder ein Polyvinylacetat enthält.

6. Mehrschichtfolie nach Anspruch 1 oder 2, **dadurch gekennzeichnet, dass** der Verträglichkeitsvermittler eine polymere Komponente mit jeweils blockweise angeordnete hydrophile und hydrophobe Gruppen enthält.

7. Mehrschichtfolie nach Anspruch 6, **dadurch gekennzeichnet, dass** der Verträglichkeitsvermittler ein blockartig verseiftes hydrolysiertes Polyvinylacetat enthält.

8. Mehrschichtfolie nach Anspruch 1 oder 2, **dadurch gekennzeichnet, dass** der Weichmacher Glycerin ist.

9. Mehrschichtfolie nach einem der Ansprüche 1 bis 8, **dadurch gekennzeichnet, dass** die gesamte Dicke der Folie im Bereich zwischen 10 µm bis 300 µm liegt.

10. Mehrschichtfolie nach einem der Ansprüche 1 bis 9, **dadurch gekennzeichnet, dass** die Dicke einer Polyesterschicht zwischen 1 µm bis 100 µm beträgt.

11. Mehrschichtfolie nach einem der Ansprüche 1 bis 10, **dadurch gekennzeichnet, dass** die Dicke einer Stärkeblendschicht zwischen 5 und 250 µm beträgt.

12. Mehrschichtfolie nach einem der Ansprüche 1 bis 11, **dadurch gekennzeichnet, dass** eine Stärkeblendschicht 2 mal bis zu 10 mal dicker ist als eine Polyesterschicht.

13. Verfahren zur Herstellung einer Mehrschichtfolie nach Anspruch 1 durch Coextrusion, vorzugsweise Blascoextrusion, bei dem mindestens je eine
a.) Schicht aus einem modifizierten thermoplastischen Stärkeblend, und
b.) Schicht aus einem biologisch abbaubaren Polyester,
aufgebaut wird, wobei die Materialien der Stärkeblendschicht und der Polyesterschicht bei der Coextrusion vergleichbare Schmelz- und Viskositätseigenschaften aufweisen, das modifizierte Stärkeblend bis zu 10 % Wasser enthält und die Temperatur des Stärkeblends 160 °C nicht übersteigt.

14. Verfahren nach Anspruch 13, **dadurch gekennzeichnet, dass** die Materialien der Innenschicht und der Außenschicht eine Viskosität mit einem MFI-Wert zwischen 4 g bis 10 g pro 10 min bei 130 °C und 10 kg Belastung oder einem MFI-Wert zwischen 5 g bis 40 g pro 10 min bei 160 °C und 10 kg Belastung aufweisen.

15. Verfahren nach Anspruch 13 oder 14, **dadurch gekennzeichnet, dass** die Temperatur des Stärkeblends zwischen 90 °C bis 140 °C gehalten wird.

16. Verfahren nach einem der Ansprüche 13 bis 15, **dadurch gekennzeichnet, dass** die Temperatur des Polyesters zwischen 110 °C bis 150 °C oder bei der Verwendung von Polylactiden für die Polyesterschicht zwischen 150 °C und 190 °C gehalten wird.

17. Verfahren nach einem der Ansprüche 13 bis 16, **gekennzeichnet durch** ein Aufblasverhältnis von 1 : 2 bis 1 : 5 und Abzugsgeschwindigkeiten von 8 m bis 30 m pro min.

18. Verfahren nach einem der Ansprüche 13 bis 17, **dadurch gekennzeichnet, dass** die Folie nach der Extrusion gereckt wird.

19. Verfahren nach Anspruch 18, **dadurch gekennzeichnet, dass** die Folie bei einer Temperatur zwischen 40 °C und 80 °C gereckt wird.

20. Verfahren nach Anspruch 18 oder 19, **dadurch gekennzeichnet dass** die Folie in einem Verhältnis von bis zu 1 : 5 gereckt wird.

21. Verwendung einer Mehrschichtfolie nach einem der Ansprüche 1 bis 12 als Verpackungsmaterial.

22. Verwendung einer Mehrschichtfolie nach einem der Ansprüche 1 bis 12 als Verpackungsmaterial für Lebensmittel.

## Claims

1. A multi-layer film obtainable by coextrusion, comprised of, respectively, at least one
a) starch blend layer comprised of a modified thermoplastic starch blend, comprised of the following components:
• 30 % to 75 % starch,
• 2 % to 10 % water,
• 10 % to 50 % biodegradable polyester,
• 5 % to 20 % compatibilizer,
• up to 10 % plasticizer, and
• up to 3 % processing agent, and
b) polyester layer comprised of a biodegradable polyester,
wherein the starch blend layer contains no polyhydroxyalkanoate copolymer consisting of at least two randomly repeating monomer units,
wherein a first monomer has the structure (I): 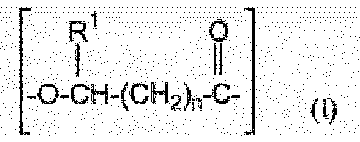 wherein R1 is H or a C1 or C2 alkyl group, with n = 1 or 2;
wherein a second monomer has the structure (II): 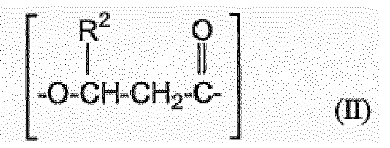 wherein R2 is a C3 to C 19 alkyl or C3 to C 19 alkenyl group,
or the second monomer has the structure (III): 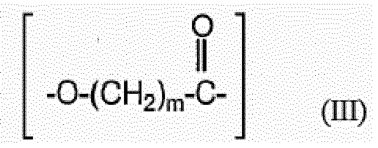 wherein m is from 2 to 9.

2. The multi-layer film according to claim 1, **characterized in that** the starch blend layer is surrounded by two polyester layers.

3. The multi-layer film according to claim 1 or 2, **characterized in that** the biodegradable polyester is comprised of dihydroxy compounds and dicarboxylic acids as monomers.

4. The multi-layer film according to claim 3, **characterized in that** the monomers are butanediol, adipic acid, and terephthalic acid; or butanediol, succinic acid, and adipic acid.

5. The multi-layer film according to claim 1 or 2, **characterized in that** the polyester layer comprises a polylactide; or a blend of a polylactide and another polyester; or a polyvinyl acetate.

6. The multi-layer film according to claim 1 or 2, **characterized in that** the compatibilizer comprises a polymer component having hydrophilic and hydrophobic groups arranged in blocks, respectively.

7. The multi-layer film according to claim 6, **characterized in that** the compatibilizer comprises a hydrolyzed polyvinyl acetate that is saponified in blocks.

8. The multi-layer film according to claim 1 or 2, **characterized in that** the plasticizer is glycerine.

9. The multi-layer film according to one of the claims 1 to 8, **characterized in that** the total thickness of the film is in a range of between 10 µm to 300 µm.

10. The multi-layer film according to one of the claims 1 to 9, **characterized in that** the thickness of a polyester layer is between 1 µm to 100 µm.

11. The multi-layer film according to one of the claims 1 to 10, **characterized in that** the thickness of a starch blend layer is between 5 µm to 250 µm.

12. The multi-layer film according to one of the claims 1 to 11, **characterized in that** a starch blend layer is two times to 10 times thicker than a polyester layer.

13. A method for manufacturing by coextrusion, preferably by blow extrusion, a multi-layer film according to claim 1, wherein, respectively, at least one a) layer of a modified thermoplastic starch blend and b) layer comprised of a biodegradable polyester is built up, wherein the materials of the starch blend layer and of the polyester layer have comparable melting and viscosity properties, the modified starch blend contains up to 10 % water and the temperature temperature of the starch blend does not surpass 160 °C.

14. The method according to claim 13, **characterized in that** the materials of the inner layer and of the outer layer have a viscosity of an MFI value between 4 g to 10 g per 10 minutes at 130 °C and 10 kg load or of an MFI value between 5 g to 40 g per 10 minutes at 160 °C and 10 kg load.

15. The method according to claim 13 or 14, **characterized in that** the temperature of the starch blend is kept between 90 °C to 140°C.

16. The method according to one of the claims 13 to 15, **characterized in that** the temperature of the polyester is kept between 110 °C to 150 °C or, when using polylactides for the polyester layer, is kept between 150 °C and 190 °C.

17. The method according to one of the claims 13 to 16, **characterized by** a blow ratio of 1:2 to 1:5 and removal speeds of 8 m to 30 m per minute.

18. The method according to one of the claim 13 to 17, **characterized in that** the film is stretched after extrusion.

19. The method according to claim 18, **characterized in that** the film is stretched at a temperature between 40 °C and 80 °C.

20. The method according to claim 18 or 19, **characterized in that** the film is stretched at a ratio of up to 1: 5.

21. Use of a multi-layer film according to one of the claims 1 to 12 as a packaging material.

22. Use of a multi-layer film according to one of the claims 1 to 12 as a packaging material for food.

## Revendications

1. Feuille multicouche pouvant être obtenue par coextrusion, fabriquée à partir d'au moins respectivement
a) une couche de mélange d'amidon composée d'un mélange d'amidon thermoplastique modifié formé des composants suivants :
• 30 % à 75 % d'amidon,
• 2%à10%d'eau,
• 10 % à 50 % de polyester biodégradable,
• 5 % à 20 % d'agent de compatibilité,
• jusqu'à 10 % de plastifiant, et
• jusqu'à 3 % d'auxiliaire de traitement, et
b) une couche de polyester composée d'un polyester biodégradable,
où la couche de mélange d'amidon ne contient pas de copolymère de polyhydroxyalcanoate composé d'au moins 2 motifs monomères se répétant de façon aléatoire,
où un premier monomère a la structure (I) : 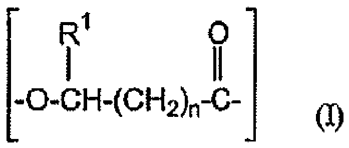 dans laquelle R1 représente H ou un radical alkyle en C₁ ou C₂, avec n = 1 ou 2 ;
où un second monomère a la structure (II) : 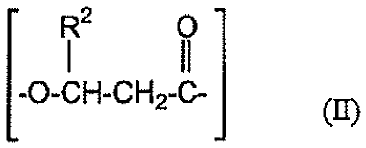 dans laquelle R2 est un radical alkyle en C₃ à C₁₉ ou alcényle en C₃ à C₁₉,
ou le second monomère a la structure (III) : 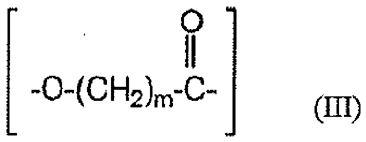 dans laquelle m est compris entre 2 et 9.

2. Feuille multicouche selon la revendication 1, **caractérisée en ce que** la couche de mélange d'amidon est entourée de deux couches de polyester.

3. Feuille multicouche selon la revendication 1 ou 2, **caractérisée en ce que** le polyester biodégradable est constitué de composés dihydroxy et d'acides dicarboxyliques en tant que monomères.

4. Feuille multicouche selon la revendication 3, **caractérisée en ce que** les monomères sont le butanediol, l'acide adipique et l'acide téréphtalique, ou le butanediol, l'acide succinique et l'acide adipique.

5. Feuille multicouche selon la revendication 1 ou 2, **caractérisée en ce que** la couche de polyester contient un polylactide ou un mélange de polylactide et d'un autre polyester ou un acétate de polyvinyle.

6. Feuille multicouche selon la revendication 1 ou 2, **caractérisée en ce que** l'agent de compatibilité contient un composant polymère présentant des groupes hydrophiles et hydrophobes disposés respectivement par blocs.

7. Feuille multicouche selon la revendication 6, **caractérisée en ce que** l'agent de compatibilité contient un acétate de polyvinyle hydrolysé et saponifié en blocs.

8. Feuille multicouche selon la revendication 1 ou 2, **caractérisée en ce que** le plastifiant est la glycérine.

9. Feuille multicouche selon l'une des revendications 1 à 8, **caractérisée en ce que** l'épaisseur totale de la feuille est comprise dans la plage de 10 µm à 300 µm.

10. Feuille multicouche selon l'une des revendications 1 à 9, **caractérisée en ce que** l'épaisseur d'une couche de polyester est comprise entre 1 µm et 100 µm.

11. Feuille multicouche selon l'une des revendications 1 à 10, **caractérisée en ce que** l'épaisseur d'une couche de mélange d'amidon est comprise entre 5 et 250 µm.

12. Feuille multicouche selon l'une des revendications 1 à 11, **caractérisée en ce qu'**une couche de mélange d'amidon est 2 fois à 10 fois plus épaisse qu'une couche de polyester.

13. Procédé de fabrication d'une feuille multicouche selon la revendication 1 par coextrusion, de préférence coextrusion-soufflage, dans lequel est fabriquée respectivement
a) une couche d'un mélange d'amidon thermoplastique modifié, et
b) une couche d'un polyester biodégradable,
où les matériaux de la couche de mélange d'amidon et de la couche de polyester présentent lors de la coextrusion des propriétés comparables de fusion et de viscosité, le mélange d'amidon modifié contient jusqu'à 10 % d'eau et la température du mélange d'amidon ne dépasse pas 160 °C.

14. Procédé selon la revendication 13, **caractérisé en ce que** les matériaux de la couche interne et de la couche externe présentent une viscosité correspondant à une valeur d'indice de fluidité (MFI) comprise entre 4 g et 10 g pour 10 min à 130 °C et une charge de 10 kg, ou une valeur d'indice de fluidité (MFI) comprise entre 5 g et 40 g pour 10 min à 160 °C et une charge de 10 kg.

15. Procédé selon la revendication 13 ou 14, **caractérisé en ce que** la température du mélange d'amidon est maintenue entre 90 °C et 140 °C.

16. Procédé selon l'une des revendications 13 à 15, **caractérisé en ce que** la température du polyester est maintenue entre 110 °C et 150 °C, ou en cas d'utilisation de polylactides pour la couche de polyester entre 150 °C et 190 °C.

17. Procédé selon l'une des revendications 13 à 16, **caractérisé par** un taux de soufflage de 1:2 à 1:5 et des vitesses de sortie de 8 m à 30 m par min.

18. Procédé selon l'une des revendications 13 à 17, **caractérisé en ce que** la feuille est étirée suite à l'extrusion.

19. Procédé selon la revendication 18, **caractérisé en ce que** la feuille est étirée à une température comprise entre 40 °C et 80 °C.

20. Procédé selon la revendication 18 ou 19, **caractérisé en ce que** la feuille est étirée selon un taux allant jusqu'à 1:5.

21. Utilisation d'une feuille multicouche selon l'une des revendications 1 à 12 en tant que matériau d'emballage.

22. Utilisation d'une feuille multicouche selon l'une des revendications 1 à 12 en tant que matériau d'emballage pour produits alimentaires.
